# EUROPÄISCHE PATENTSCHRIFT

(11) **EP 1 745 228 B1**
(45) Veröffentlichungstag und Bekanntmachung des Hinweises auf die Patenterteilung: **02.04.2008**
(21) Anmeldenummer: 05736946.4
(22) Anmeldetag: 04.05.2005
(51) Int. Cl.: F16H 61/44, F16H 61/42, F16H 59/40, F16H 47/02

(54) **HYDRAULISCHER ANTRIEB FÜR MOBILFAHRZEUGE**
HYDRAULIC DRIVE FOR MOBILE VEHICLES
SYSTEME D'ENTRAINEMENT HYDRAULIQUE POUR VEHICULES MOBILES

(30) Priorität: 10.05.2004 DE 102004023628
(43) Veröffentlichungstag der Anmeldung: 24.01.2007
(73) Patentinhaber: ZF FRIEDRICHSHAFEN AG, 88038 Friedrichshafen (DE)
(72) Erfinder: LEGNER, Jürgen, 88048 Friedrichshafen (DE)
(86) Internationale Anmeldenummer: PCT/EP2005/004833
(87) Internationale Veröffentlichungsnummer: WO 2005/111474

(56) Entgegenhaltungen:
- WO-A-99/65721
- DE-A1- 3 907 633
- DE-A1- 19 957 791
- US-A- 3 171 255
- US-A- 4 244 184
- US-A- 4 766 727
- US-B1- 6 343 470

## Beschreibung

Die Erfindung bezieht sich auf einen hydraulischen Antrieb für Mobilfahrzeuge nach der im Oberbegriff von Anspruch 1 näher definierten Art wie aus der WO 99/65721 A bekannt.

Hydraulische Antriebe für Mobilfahrzeuge werden insbesondere für Arbeitsmaschinen, wie beispielsweise Radbagger, Radlader oder auch Grader, eingesetzt, bei welchen eine Verbrennungsmaschine eine hydraulische Pumpe antreibt, deren Förderstrom hydraulische Motore mit Druckmittel versorgt, welche wiederum mit Antriebsräder in Verbindung stehen und diese antreiben. Häufig werden Axialkolbenmotore verwendet, welche in ihrem Hubvolumen veränderbar sind, um die Drehzahl des Antriebsrads zu verändern. Bei diesen Axialkolbenmotoren ist jedoch die maximale Drehzahl begrenzt und ein Überschreiten dieser Drehzahl würde zur Beschädigung des Motors führen.

Die US 4,069,886 offenbart einen hydraulischen Antrieb für ein Mobilfahrzeug, bei welchem die Vorderräder über je einen Motor antreibbar sind und die Hinterräder über ein mechanisches Getriebe direkt von der Verbrennungsmaschine angetrieben werden. Da die hydraulischen Motore in ihrer Drehzahl begrenzt sind, können die Vorderräder nur in einem begrenzten Arbeitsbereich verwendet werden und müssen oberhalb dieses Arbeitsbereichs über mechanische Kupplungen vom Fahrzeugrad getrennt werden. Die Motore werden hierfür mechanisch vollständig abgekoppelt. Dadurch ist es möglich, über den eigentlichen Fahrantrieb des Fahrzeugs die Vorderräder in einer höheren Drehzahl als der zulässigen Drehzahl der Hydromotore zu betreiben. Die Hydromotore befinden sich hierbei im Stillstand.

Die DE 39 07 633 C2 offenbart einen hydraulischen Antrieb für ein Mobilfahrzeug, welcher als alleiniger Fahrantrieb dient, wobei eine Verbrennungsmaschine eine hydraulische Pumpe antreibt, deren Volumenstrom zwei Hydromotore mit Druckflüssigkeit versorgt, welche über ein Untersetzungsgetriebe mit einer Abtriebswelle verbindbar sind. Da die Hydromotore über unterschiedliche Untersetzungen mit der Abtriebswelle in Verbindung stehen, besteht die Gefahr, dass ein Hydromotor über seine maximale Drehzahl hinaus betrieben wird. Aus diesem Grund ist zwischen der Abtriebswelle und einem Hydromotor eine Kupplung angeordnet, damit der Hydromotor mechanisch abgekoppelt werden kann.

Der vorliegenden Erfindung liegt die Aufgabe zugrunde, einen hydraulischen Antrieb für Mobilfahrzeuge zu schaffen, bei welcher mindestens ein hydraulischer Motor eine Abtriebswelle antreibt und auch oberhalb einer maximalen Drehzahl dieses Motors mit der Abtriebswelle verbunden bleiben kann, indem der Motor oberhalb seiner maximalen Drehzahl betreibbar ist.

Die Aufgabe wird mit einem, auch die kennzeichnenden Merkmale des Hauptanspruchs aufweisenden, gattungsgemäßen hydraulischen Antrieb für Mobilfahrzeuge gelöst.

Erfindungsgemäß weist der hydraulische Antrieb mindestens einen in seinem Hubvolumen verstellbaren Motor auf, dessen Hubvolumen bis auf Null veränderbar ist. In diesem Zustand weist der Hydromotor nahezu kein Hubvolumen mehr auf, wodurch er einerseits außer der Leckage von dem Volumenstrom der Pumpe keinen Volumenstrom aufnimmt und andererseits kein Drehmoment abgibt. Zusätzlich werden die Druckmittelzuführung und die Druckmittelrückführung von der Pumpe zum Motor verschlossen und die Druckmittelzuführung und die Druckmittelrückführung des hydraulischen Motors kurzgeschlossen und mit mit einem geringen Druck beaufschlagt. Dies ist vorzugsweise der Schmierdruck des Getriebes (Rücklaufdruck nach Kühler). Es besteht auch die Möglichkeit, den Speisedruck zu verwenden. Dadurch wirkt auf den Motor bei seiner Hoch- und Niederdruckseite ausschließlich ein sehr niedriger Druck, wodurch alle Bauteile des Motors mit geringen Kräften beaufschlagt sind und dadurch ein geringes Widerstandsdrehmoment erzeugen, wodurch der Motor in einer sehr hohen Drehzahl betrieben werden kann. Vorzugsweise ist der Motor als Radialkolbenmotor ausgeführt, welcher eine Kurbelwelle aufweist, welche mit den Kolben in Wirkverbindung steht. Indem der Motor so auf Hubvolumen Null verstellt wird, dass er nahezu kein Hubvolumen mehr aufweist, wird die Exzentrizität der Kurbelwelle ausgeglichen, wodurch die Kurbelwelle des Motors konzentrisch zu ihrem Antrieb läuft und die Kolben nahezu keine Hubbewegung in den Zylindern ausführen. Der Radialkolbenmotor ist vorzugsweise, wie der Radialkolbenmotor in der WO 99/17021 A1 ausgeführt, welche hiermit vollständig umfaßt sein soll, wobei die Verstellung des hydraulischen Motors vorzugsweise nicht mechanisch, sondern hydraulisch erfolgt, wodurch die Verstellkolben in der Kurbelwelle über hydraulischen Druck verstellt werden. Vorzugsweise ist der hydraulische Druck mit der Druckmittelzuführung des Motors verbunden, wodurch bei Abschaltung der Druckmittelzufuhr der Motor automatisch in das Null-Hubvolumen verstellt wird. Vorzugsweise wird der Motor zuerst in das Hubvolumen Null verstellt und anschließend vom Hochdruck getrennt.

In einer weiteren Ausgestaltungsform ist in dem abgeschalteten Zustand des hydraulischen Motors die Druckmittelzuführung und die Druckmittelrückführung mit dem Druckmittelausgang einer Speisepumpe bzw. dem Schmierdruck des Getriebes (Rücklaufdruck nach Kühler) verbunden, wodurch die Leckage des hydraulischen Motors permanent mit kühlem Druckmittel aufgefüllt wird. Somit wird ein Überhitzen des Motors verhindert. Durch die hydraulische Trennung vom Hochdruck und die Verstellung des hydraulischen Motors in ein Null-Hubvolumen ist es nicht mehr notwendig, den Motor mechanisch von dem Abtrieb zu trennen, wodurch keinerlei Schaltstöße beim Entkoppeln oder beim Wiedereinkoppeln entstehen. Indem der Motor mit Speisedruck oder Schmierdruck beaufschlagt bleibt, entleeren sich die Zylinder nicht, wodurch beim Zuschalten kein Schaltstoß entsteht.

In einer weiteren Ausgestaltungsform ist der hydraulische Motor als Zusatzantrieb für Vorderräder, beispielsweise eines Graders, ausgestaltet, wobei der Hauptfahrantrieb über den Verbrennungsmotor und ein Untersetzungsgetriebe erfolgt, die hydraulischen Motore bei einem definierten Arbeitsbereich zugeschaltet werden und oberhalb der zulässigen Drehzahl des Hydromotors der Hydromotor hydraulisch mit dem Speisedruck oder Schmierdruck verbunden und auf Null-Schlückvolumen verstellt ist, wodurch der hydraulische Motor oberhalb seiner Drehzahl betrieben werden kann.

In einer weiteren Ausgestaltungsform sind mindestens zwei hydraulische Motore über ein Summierungsgetriebe mit einer Abtriebswelle verbunden und bilden den Fahrantrieb des Fahrzeugs. Beide Motore sind permanent mit der Abtriebswelle in mechanischer Wirkverbindung und in ihrem Schluckvolumen verstellbar. Zwischen der Abtriebswelle und dem Hydromotor können Untersetzungsgetriebe unterschiedlicher Übersetzung angeordnet sein. Wird der Hydromotor oberhalb seiner zulässigen Drehzahl betrieben, so weist dieser kein Hubvolumen auf und seine Zu- und Rückführung sind mit dem Speisedruck oder Schmierdruck verbunden.

Es besteht auch die Möglichkeit, die Motore im offenen Kreis zu betreiben.

Indem die Motore nicht auf der Abtriebswelle angeordnet sind, ist es möglich, die Druckmittelzuführung zur Verstellung des Hubvolumens auf einer Seite der Kurbelwelle in der Kurbelwelle anzuordnen und mit dem Hochdruck zu verbinden. Die Abdichtung kann somit auf einem geringen Durchmesser angeordnet sein, wodurch auch bei höheren Drücken höhere Drehzahlen möglich sind.

Erfindungsgemäß wird somit ein hydraulischer Antrieb geschaffen, welcher auch oberhalb seiner maximal zulässigen Drehzahl betrieben werden kann und keinerlei mechanische Abschaltvorrichtungen benötigt.

Weitere Merkmale sind der Figuren-Beschreibung zu entnehmen. Es zeigen:

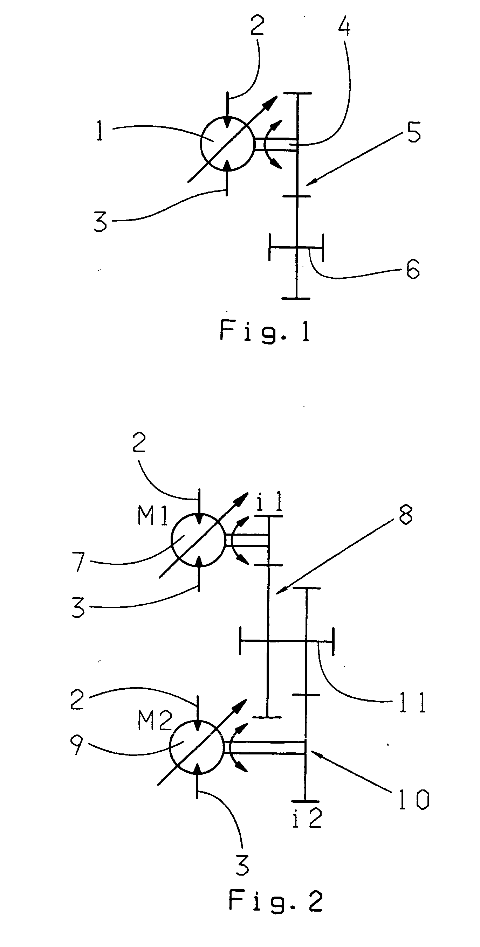

- Fig. 1: ein Schema eines hydraulischen Motors mit einer Untersetzungsstufe;
- Fig. 2: ein Schema eines Summierungsgetriebes mit zwei hydraulischen Motoren;

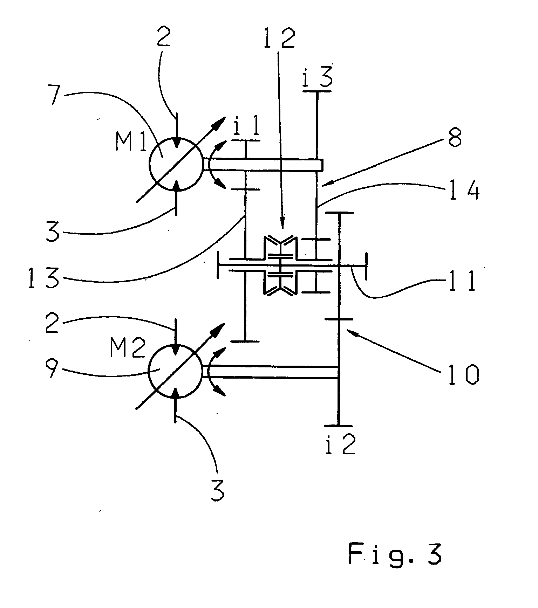

- Fig. 3: ein Schema eines Summierungsgetriebes mit zwei hydraulischen Motoren mit einer schaltbaren Getriebestufe und

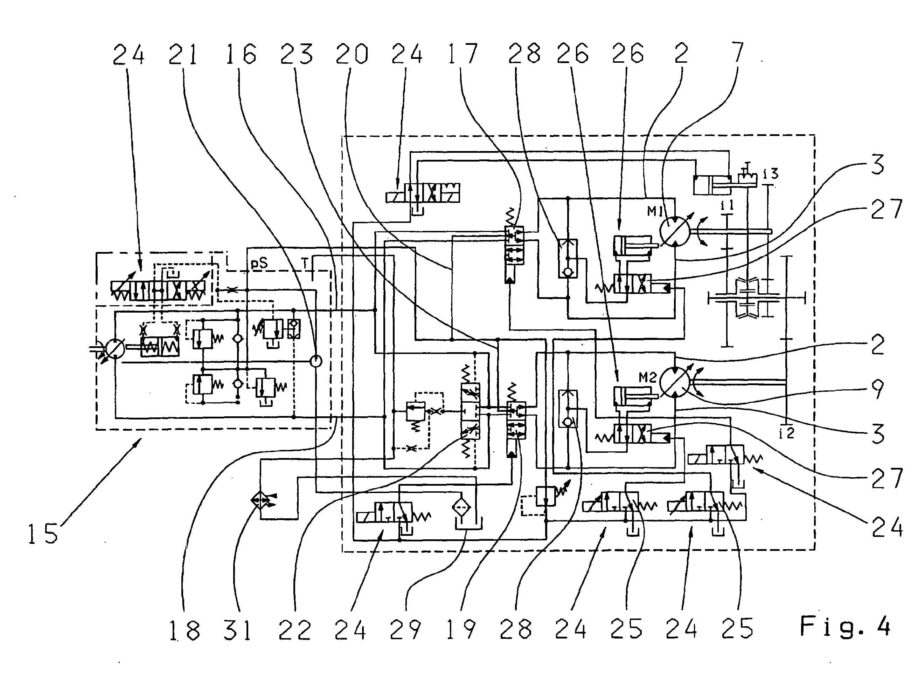

- Fig. 4: einen hydraulischen Schaltplan des erfindungsgemäßen Antriebs.

### Fig. 1:

Ein in seinem Hubvolumen verstellbarer hydraulischer Motor 1 weist eine Druckmittelzuführung 2 und eine Druckmittelrückführung 3 auf. Die Druckmittelzuführung 2 und die Druckmittelrückführung 3 stehen mit einer nicht gezeigten Druckmittelquelle in Verbindung. Der Abtrieb 4 des Motors 1 ist mit einem Untersetzungsgetriebe 5 verbunden. Der Abtrieb 6 des Untersetzungsgetriebes 5 steht mit einem Fahrzeugrad in Verbindung. Wird der Abtrieb 4 oberhalb einer definierten Drehzahl betrieben, so sind die Druckmittelzuführung 2 und die Druckmittelrückführung 3 des Motors 1 mit dem Speisedruck oder Schmierdruck der Druckmittelquelle verbunden und der Motor 1 so verstellt, dass er nahezu kein Hubvolumen aufweist. Die Ansteuerung des Hubvolumens und des Schaltventils kann über eine elektronische Steuereinheit gesteuert sein. Die definierte Drehzahl ist die maximal zulässige Drehzahl des Hydromotors bei Hochdruckbeaufschlagung.

### Fig. 2:

Ein erster Motor 7 treibt ein erstes Untersetzungsgetriebe 8 und ein zweiter Motor 9 treibt ein zweites Untersetzungsgetriebe 10 an. Die Druckmittelzuführungen 2 und die Druckmittelrückführungen 3 sind parallel mit der Druckmittelquelle verbunden. Das erste Untersetzungsgetriebe und das zweite Untersetzungsgetriebe können die gleiche Übersetzung aufweisen, es ist jedoch vorteilhaft, die Untersetzungsgetriebe mit unterschiedlichen Übersetzungen auszuführen. Vorzugsweise sind die Übersetzungen so ausgeführt, dass in einem ersten Arbeitsbereich der erste Motor 7 und der zweite Motor 9 in Parallelschaltung mit dem Förderausgang der Druckmittelquelle und dem Saugeingang der Druckmittelquelle verbunden sind, wobei der Förderausgang mit der Druckmittelzuführung und der Saugeingang mit der Druckmittelrückführung verbunden sind. Durch Verstellung des Volumens der hydraulischen Pumpe des ersten Motors 7 und des zweiten Motors 9 kann die Drehzahl der Abtriebswelle 11, welche sowohl mit dem ersten Untersetzungsgetriebe 8 als auch mit dem zweiten Untersetzungsgetriebe 10 verbunden ist, verändert werden. Vorzugsweise sind der Hydromotor und die Übersetzung so ausgelegt, dass der Motor, welcher im zweiten Fahrbereich kein Hubvolumen mehr aufweist und über seiner maximalen Drehzahl betrieben wird, seine maximale Drehzahl am Ende des ersten Fahrbereichs erreicht. Anschließend wird dieser Motor auf nahezu kein Hubvolumen verstellt und hydraulisch die Druckmittelzuführung 2 und die Druckmittelrückführung 3 mit dem Speisedruck oder Schmierdruck der Druckmittelquelle verbunden. Es besteht auch die Möglichkeit, die Druckmittelzuführung 2 und die Druckmittelrückführung 3 mit einer Leitung, welche den selben Druck aufweist als der Saugeingang der Druckmittelquelle, zu verbinden. Im zweiten Fahrbereich wird dann das Hubvolumen des noch verbleibenden Motors weiter verringert und der andere Motor oberhalb seiner zulässigen Drehzahl betrieben, ohne beide Motoren mechanisch von der Abtriebswelle 11 zu trennen.

### Fig. 3:

Ein erster Motor 7 ist über ein erstes Untersetzungsgetriebe 8 und ein zweiter Motor 9 ist über ein zweites Untersetzungsgetriebe 10 mit der Abtriebswelle 11 verbunden. Das erste Untersetzungsgetriebe 8 ist über eine Schalteinrichtung 12 schaltbar ausgeführt, wobei über die Schalteinrichtung 12 die Abtriebswelle 11 über eine erste Untersetzung 13 oder über eine zweite Untersetzung 14 mit dem ersten Motor 7 verbunden werden kann. Die Schalteinrichtung 12 ist vorzugsweise als Synchronisiereinrichtung ausgebildet und eine Schaltung der Schalteinrichtung wird dann ausgeführt, wenn der Motor 7 nahezu kein Hubvolumen mehr aufweist und hydraulisch vom Kreis getrennt ist. Die Schalteinrichtung 12 wird in diesem Zustand kaum belastet, da ausschließlich die trägen Massen der Zahnräder und Wellen beschleunigt werden müssen, da die Kolben in den Zylindern keine Hubbewegung ausführen und sich nicht drehen. Vorzugsweise sind bei der Schaltung auch die Druckmittelzuführung 2 und die Druckmittelrückführung 3 mit dem Speisedruck oder Schmierdruck verbunden, wodurch sich die Lagerkräfte des Hydromotors zusätzlich verringern. Um beim Anfahren ein möglichst großes Drehmoment zu erhalten, wird mit beiden Motoren und vollem Hubvolumen angefahren, wobei über die Schalteinrichtung 12 die größere Untersetzung 13 zugeschaltet ist. Durch Verändern des Hubvolumens der Druckmittelquelle und des ersten Motors 7 und des zweiten Motors 9 wird die Drehzahl der Abtriebswelle 11 erhöht, Bei Erreichen einer maximalen Drehzahl des ersten Motors 7 oder des zweiten Motors 9 wird über die Schalteinrichtung 12 auf die kleinere Untersetzung 14 geschaltet, wodurch bei der maximalen Abtriebsdrehzahl der Abtriebswelle 11 der erste Motor 7 über die zweite Untersetzung 14 die Abtriebswelle 11 antreibt und der zweite Motor 9 kein Hubvolumen aufweist und hydraulisch mit dem Niederdruck oder Schmierdruck verbunden ist.

### Fig. 4:

Eine Druckmittelquelle 15 wird von einer nicht gezeigten Antriebsmaschine angetrieben. Der Förderausgang 16 ist mit der Druckmittelzuführung 2 des ersten Motors 7 über ein Ventil 17 verbunden. Der Saugeingang 18 ist mit der Druckmittelrückführung 3 des ersten Motors 7 ebenfalls über das Ventil 17 verbunden. Der Förderausgang 16 und der Saugeingang 18 sind über das Ventil 19 mit der Druckmittelzuführung 2 und der Druckmittelrückführung 3 des zweiten Motors 9 verbunden. Je nach Förderrichtung der Druckmittelquelle 15 können sich der Förderausgang 16 und der Saugeingang 18 vertauschen. Das Ventil 17 und das Ventil 19 sind über eine Leitung 20 bzw. 23 mit dem Niederdruck verbunden. Vorzugsweise sind die Leitungen 20 und 23mit dem Ausgang der Speisepumpe 21 verbunden, wodurch in die Leitung 20 gekühltes Druckmittel gelangt. Es besteht jedoch auch die Möglichkeit, die Leitung 20 mit der Ausgangsleitung des Spülventils 22 zu verbinden, wodurch die Leitung 20 ebenfalls mit Niederdruck beaufschlagt sein kann. Das Ventil 19 ist ebenfalls über seine Leitung 23 mit dem Niederdruck verbunden. Außerdem besteht auch die Möglichkeit, die Leitungen 20 und 23 mit der Rücklaufleitung 30 vom Kühler 31 zum Tank 29 zu verbinden. Eine nicht gezeigte elektronische Steuereinheit ist mit den Ventilen 24 verbunden, wobei die Ventile 25 als Proportionalventile ausgebildet sind. Die Proportionalventile 25 beaufschlagen die Hubvolumen-Verstelleinrichtung 26 und verstellen somit das Hubvolumen der Hydromotore 7 und 9. Indem zwischen der Hubvolumen-Verstelleinrichtung 26 und den Proportionalventilen 25 Ventile 27 angeordnet sind, deren Druckversorgung von einem Ventil 28 erfolgt, welches mit der Druckmittelzuführung 2 und der Druckmittelrückführung 3 verbunden ist, besteht die Möglichkeit, durch Umschalten der Ventile 25 automatisch den ersten Motor 7 bzw. den zweiten Motor 9 im Hubvolumen so zu verstellen, dass er nahezu kein Hubvolumen aufweist. Vorzugsweise wird der Motor 7 bzw. 9 zuerst über das Ventil 27 auf das Hubvolumen Null gestellt und anschließend das Ventil 17 bzw. 19 so umgeschaltet, dass die Druckmittelzuführung 2 und die Druckmittelrückführung 3 mit der Leitung 20 verbunden sind und dadurch die Verstelleinrichtung 26 ebenfalls mit der Leitung 20 verbunden ist, wodurch das Hubvolumen des Motors nicht vergrößert werden kann. Wird jedoch das Ventil 17 bzw. das Ventil 19 so geschaltet, dass die Druckmittelzuführung 2 mit dem Förderausgang 16 der Druckmittelquelle 15 und die Druckmittelrückführung 3 mit dem Saugeingang 18 verbunden sind, so sorgt das Ventil 28 dafür, dass die Verstelleinrichtung 26 mit dem Hochdruck beaufschlagt wird, wodurch eine Verstellung des Motors 7 bzw. 9 möglich ist.

In einer weiteren Ausgestaltung der Erfindung sind der erste Motor 7, der zweite Motor 9 sowie das Untersetzungsgetriebe 5 und die Ventile innerhalb des Getriebegehäuses angeordnet, wobei das Getriebegehäuse gleichzeitig den Tank 29 bildet. Die Leckage der Hydromotore gelangt somit direkt in das Getriebegehäuse und vermischt sich mit dem Druckmittel im Tank. Vorzugsweise sind die Hydromotore oberhalb des Druckmittelniveaus des Tanks angeordnet, wodurch ein Panschverlust vermieden wird.

### Bezugszeichen

- 1: Motor
- 2: Druckmittelzuführung
- 3: Druckmittelrückführung
- 4: Abtrieb
- 5: Untersetzungsgetriebe
- 6: Abtrieb
- 7: erster Motor
- 8: erstes Untersetzungsgetriebe
- 9: zweiter Motor
- 10: zweites Untersetzungsgetriebe
- 11: Abtriebswelle
- 12: Schalteinrichtung
- 13: erste Untersetzung
- 14: zweite Untersetzung
- 15: Druckmittelquelle
- 16: Förderausgang
- 17: Ventil
- 18: Saugeingang
- 19: Ventil
- 20: Leitung
- 21: Speisepumpe
- 22: Spülventil
- 23: Leitung
- 24: elektronische Steuereinheit
- 25: Proportionalventile
- 26: Hubvolumen-Verstelleinrichtung
- 27: Ventil
- 28: Ventil
- 29: Tank
- 30: Rücklaufleitung
- 31: Kühler

## Patentansprüche

1. Hydraulischer Antrieb für Mobilfahrzeuge mit mindestens einem hydrostatischen Motor (1), mit einer maximal zulässigen Drehzahl seiner Abtriebswelle (6) bei Beaufschlagung seiner Druckmittelzuführung (2) mit Hochdruck, wobei der Motor (1) über eine Druckmittelzuführung (2) einem Förderausgang (16) einer Druckmittelquelle (15) und über eine Druckmittelrückführung (3) mit einem Saugeingang (18) der Druckmittelquelle (15) in Verbindung steht, wobei der Motor (1) mittelbar oder unmittelbar ein Antriebsrad antreibt und in seinem Hubvolumen veränderbar ist, wodurch die Drehzahl des Antriebsrads veränderbar ist, **dadurch gekennzeichnet, dass** der Motor (1) ein Radialkolbenmotor ist und eine Kurbelwelle aufweist, mit welcher in Zylinder angeordnete Kolben in Wirkverbindung stehen, und das Hubvolumen über eine Hubvolumen-Verstelleinrichtung (26) verstellbar ist, wobei der Hub der Kolben bei Rotation der Kurbelwelle einstellbar ist, und oberhalb der maximal zulässigen Drehzahl der Abtriebswelle (6) die Verstelleinrichtung (26) so verstellt ist, dass die Kolben nahezu keinen Hub in den Zylindern ausführen und die Druckmittelzuführung (2) von dem Förderausgang (16) getrennt ist und mit der Druckmittelrückführung (3) so in Verbindung steht, dass auf die Druckmittelrückführung (3) und auf die Druckmittelzuführung (2) der Druck wirkt, welcher auf den Saugeingang (18) der Druckmittelquelle (15) oder in einer Rücklaufleitung (30) von einem Kühler (31) zum Tank (29) wirkt, so dass die Abtriebswelle (6) mit höherer Drehzahl als die maximal zulässige Drehzahl betrieben werden kann.

2. Hydraulischer Antrieb für Mobilfahrzeuge nach Anspruch 1, **dadurch gekennzeichnet, dass** der Antrieb ein Vorderrad einer Baumaschine antreibt, wobei die Hinterräder durch ein weiteres Untersetzungsgetriebe angetrieben werden.

3. Hydraulischer Antrieb für Mobilfahrzeuge nach Anspruch 1, **dadurch gekennzeichnet, dass** die Abtriebswelle des Radialkolbenmotors (7) mittelbar oder unmittelbar mit einer Abtriebswelle eines weiteren Motors (9) gekoppelt ist, wobei die Drehmomente der Motoren aufsummiert und einer gemeinsamen Abtriebswelle (11) zugeführt werden.

4. Hydraulischer Antrieb für Mobilfahrzeuge nach Anspruch 1, **dadurch gekennzeichnet, dass** der Radialkolbenmotor (1) als Antrieb des Mobilfahrzeugs wirkt und bei Überschreiten einer Geschwindigkeit, welcher der maximal zulässigen Drehzahl bei Hochdruckbeaufschlagung des Hydromotors entspricht, automatisch die Druckmittelzuführung (2) von dem Förderausgang (16) getrennt und mit der Druckmittelrückführung (3) verbunden wird.

5. Hydraulischer Antrieb für Mobilfahrzeuge nach Anspruch 3, **dadurch gekennzeichnet, dass** zwischen dem Radialkolbenmotor (7) und dem Summierungsgetriebe (11) ein Untersetzungsgetriebes (8) und zwischen dem weiteren Radialkolbenmotor (9) und dem Summierungsgetriebe (11) ein weiteres Untersetzungsgetriebe (10) angeordnet ist.

6. Hydraulischer Antrieb für Mobilfahrzeuge nach Anspruch 5, **dadurch gekennzeichnet, dass** die Übersetzung des Untersetzungsgetriebes (8) größer ist als die Übersetzung des weiteren Untersetzungsgetriebes (10).

7. Hydraulischer Antrieb für Mobilfahrzeuge nach Anspruch 3, **dadurch gekennzeichnet, dass** der weitere Motor (9) ein in seinem Hubvolumen verstellbarer Radialkolbenmotor ist.

8. Hydraulischer Antrieb für Mobilfahrzeuge nach Anspruch 1, **dadurch gekennzeichnet, dass** der Druck, welcher auf den Saugeingang (18) wirkt, von einer Speisepumpe (21) erzeugt wird.

9. Hydraulischer Antrieb für Mobilfahrzeuge nach Anspruch 1, **dadurch gekennzeichnet, dass** die Druckmittelzuführung (2) und die Druckmittelrückführung (3) mit dem Ausgang eines Spülventils (22) verbindbar sind.

10. Hydraulischer Antrieb für Mobilfahrzeuge nach Anspruch 1, **dadurch gekennzeichnet, dass** die Druckmittelzuführung (2) und die Druckmittelrückführung (3) mit einer Leitung (20, 23) verbindbar sind, welche mit dem Druckmittelausgang einer Speisepumpe (21) verbunden ist.

11. Hydraulischer Antrieb für Mobilfahrzeuge nach Anspruch 1, **dadurch gekennzeichnet, dass** die Druckmittelzuführung (2) und die Druckmittelrückführung (3) mit einer Rücklaufleitung (30) von einem Kühler (31) zum Tank (29) verbindbar ist.

## Claims

1. Hydraulic drive for mobile vehicles comprising at least one hydrostatic motor (1), having a maximum allowable rotational speed of its output shaft (6) upon loading of its pressure medium supply line (2) with high pressure, wherein the motor (1) is connected by a pressure medium supply line (2) a delivery outlet (16) of a pressure medium source (15) and by a pressure medium return line (3) to a suction inlet (18) of the pressure medium source (15), wherein the motor (1) indirectly or directly drives a driving wheel and is variable in terms of its displacement, with the result that the rotational speed of the driving wheel is variable, **characterized in that** the motor (1) is a radial piston motor and has a crankshaft, to which pistons disposed in cylinders are workingly connected, and the displacement is variable by means of a displacement-varying device (26), wherein the stroke of the pistons upon rotation of the crankshaft is adjustable, and above the maximum allowable rotational speed of the output shaft (6) the varying device (26) is adjusted in such a way that the pistons execute hardly any stroke in the cylinders and the pressure medium supply line (2) is separated from the delivery outlet (16) and connected to the pressure medium return line (3) in such a way that the pressure acting upon the pressure medium return line (3) and upon the pressure medium supply line (2) is the pressure that acts upon the suction inlet (18) of the pressure medium source (15) or in a return line (30) from a cooler (31) to the tank (29), so that the output shaft (6) may be operated at a higher rotational speed than the maximum allowable rotational speed.

2. Hydraulic drive for mobile vehicles according to claim 1, **characterized in that** the drive drives a front wheel of a construction machine, wherein the back wheels are driven by means of a further reduction gear.

3. Hydraulic drive for mobile vehicles according to claim 1, **characterized in that** the output shaft of the radial piston motor (7) is coupled indirectly or directly to an output shaft of a further motor (9), wherein the torques of the motors are summed and supplied to a common output shaft (11).

4. Hydraulic drive for mobile vehicles according to claim 1, **characterized in that** the radial piston motor (1) acts as a drive of the mobile vehicle and, if a speed corresponding to the maximum allowable rotational speed under high-pressure loading of the hydraulic motor is exceeded, the pressure medium supply line (2) is automatically separated from the delivery outlet (16) and connected to the pressure medium return line (3).

5. Hydraulic drive for mobile vehicles according to claim 3, **characterized in that** disposed between the radial piston motor (7) and the summarizing gear (11) is a reduction gear (8) and disposed between the further radial piston motor (9) and the summarizing gear (11) is a further reduction gear (10).

6. Hydraulic drive for mobile vehicles according to claim 5, **characterized in that** the reduction ratio of the reduction gear (8) is higher than the reduction ratio of the further reduction gear (10).

7. Hydraulic drive for mobile vehicles according to claim 3, **characterized in that** the further motor (9) is a variable-displacement radial piston motor.

8. Hydraulic drive for mobile vehicles according to claim 1, **characterized in that** the pressure that acts upon the suction inlet (18) is generated by a supply pump (21).

9. Hydraulic drive for mobile vehicles according to claim 1, **characterized in that** the pressure medium supply line (2) and the pressure medium return line (3) are connectable to the outlet of a flushing valve (22).

10. Hydraulic drive for mobile vehicles according to claim 1, **characterized in that** the pressure medium supply line (2) and the pressure medium return line (3) are connectable to a line (20, 23) that is connected to the pressure medium outlet of a supply pump (21).

11. Hydraulic drive for mobile vehicles according to claim 1, **characterized in that** the pressure medium supply line (2) and the pressure medium return line (3) is connectable to a return line (30) from a cooler (31) to the tank (29).

## Revendications

1. Entraînement hydraulique pour véhicules mobiles avec au moins un moteur hydraulique (1), avec une vitesse de rotation maximale de son arbre de sortie (6) lors de mise en haute pression de son alimentation en fluide sous pression (2), dans lequel le moteur (1) est relié, par l'intermédiaire d'une alimentation en fluide sous pression (2), à une sortie de refoulement (16) d'une source de fluide sous pression (15) et par l'intermédiaire d'un retour de fluide sous pression (3) à une entrée d'aspiration (18) de la source de fluide sous pression (15), dans lequel le moteur (1) entraîne indirectement ou directement une roue motrice et sa cylindrée est variable, ce qui permet de modifier la vitesse de rotation de la roue motrice, **caractérisé en ce que** le moteur (1) est un moteur à pistons radiaux et comprend un vilebrequin avec lequel les pistons se trouvant dans des cylindres sont en interaction fonctionnelle, et la cylindrée peut être modifiée par l'intermédiaire d'un dispositif de réglage de la cylindrée (26), la course des pistons lors de la rotation du vilebrequin pouvant être réglée et, au-delà de la vitesse de rotation maximale admissible de l'arbre de sortie (6), le dispositif de réglage (26) étant ajusté de façon à ce que les pistons n'effectuent presque plus de course dans les cylindres et l'alimentation en fluide sous pression (2) étant séparée de la sortie de refoulement (16) et étant relié au retour de fluide sous pression (3) de façon à ce que la pression, qui s'exerce sur l'entrée d'aspiration (18) de la source de fluide sous pression (15) ou dans une conduite de retour (30) d'un refroidisseur (31) vers le réservoir (29), s'exerce sur le retour de fluide sous pression (3) et sur l'alimentation en fluide sous pression (2), de façon à ce que l'arbre de sortie (6) puisse être utilisé à une vitesse de rotation supérieure à la vitesse de rotation maximale admissible.

2. Entraînement hydraulique pour véhicules mobiles selon la revendication 1, **caractérisé en ce que** l'entraînement entraîne une roue avant d'un engin de chantier, les roues arrières étant entraînées par une transmission de démultiplication supplémentaire.

3. Entraînement hydraulique pour véhicules mobiles selon la revendication 1, **caractérisé en ce que** l'arbre de sortie du moteur à pistons radiaux (7) est couplé indirectement ou directement à un arbre de sortie d'un autre moteur (9), les couples des moteurs étant additionnés et transmis à un arbre de sortie commun (11).

4. Entraînement hydraulique pour véhicules mobiles selon la revendication 1, **caractérisé en ce que** le moteur à pistons radiaux (1) sert d'entraînement pour le véhicule mobile et, lors du dépassement d'une vitesse qui correspondant à la vitesse de rotation maximale admissible lors d'une alimentation en haute pression du moteur hydraulique, l'alimentation en fluide sous pression (2) est automatiquement séparée de la sortie de refoulement (16) et reliée avec le retour du fluide sous pression (3).

5. Entraînement hydraulique pour véhicules mobiles selon la revendication 3, **caractérisé en ce que**, entre le moteur à pistons radiaux (7) et la transmission additionnelle (11) se trouve une transmission de démultiplication (8) et, entre l'autre moteur à pistons radiaux (9) et la transmission additionnelle (11) se trouve une transmission de démultiplication (10).

6. Entraînement hydraulique pour véhicules mobiles selon la revendication 5, **caractérisé en ce que** le rapport de la transmission de démultiplication (8) est supérieur au rapport de la transmission de démultiplication (10).

7. Entraînement hydraulique pour véhicules mobiles selon la revendication 3, **caractérisé en ce que** l'autre moteur (9) est un moteur à pistons radiaux dont la cylindrée est réglable.

8. Entraînement hydraulique pour véhicules mobiles selon la revendication 1, **caractérisé en ce que** la pression qui s'exerce sur l'entrée d'aspiration (18) est produite par une pompe d'alimentation (21).

9. Entraînement hydraulique pour véhicules mobiles selon la revendication 1, **caractérisé en ce que** l'alimentation en fluide sous pression (2) et le retour de fluide sous pression (3) peuvent être reliés à la sortie d'une soupape de purge (22).

10. Entraînement hydraulique pour véhicules mobiles selon la revendication 1, **caractérisé en ce que** l'alimentation en fluide sous pression (2) et le retour de fluide sous pression (3) peuvent être reliés à une conduite (20, 23) reliée à la sortie de fluide sous pression d'une pompe d'alimentation (21).

11. Entraînement hydraulique pour véhicules mobiles selon la revendication 1, **caractérisé en ce que** l'alimentation en fluide sous pression (2) et le retour de fluide sous pression (3) peuvent être reliés à une conduite de retour (30) d'un refroidisseur (31) au réservoir (29).
